# FASCICULE DE BREVET EUROPEEN

(11) **EP 3 286 284 B1**
(45) Date de publication et mention de la délivrance du brevet: **05.06.2019**
(21) Numéro de dépôt: 16721670.4
(22) Date de dépôt: 19.04.2016
(51) Int. Cl.: C10G 1/06, C02F 1/461, C10G 3/00, C25B 3/10, C02F 1/463, C02F 1/467, C02F 11/18

(54) **DISPOSITIF ET PROCEDE DE TRAITEMENT DE LA BIOMASSE**
VORRICHTUNG UND VERFAHREN ZUR BEHANDLUNG VON BIOMASSE
DEVICE AND METHOD FOR TREATING BIOMASS

(30) Priorité: 22.04.2015 FR 1553601
(43) Date de publication de la demande: 28.02.2018
(73) Titulaire: Commissariat à l'Énergie Atomique et aux Énergies Alternatives, 75015 Paris (FR)
(72) Inventeur: DENIEL, Maxime, 38100 Grenoble (FR); HAARLEMMER, Geert, 38330 Montbonnot Saint-Martin (FR)
(74) Mandataire: Cabinet Laurent & Charras
(86) Numéro de dépôt international: PCT/EP2016/058650
(87) Numéro de publication internationale: WO 2016/169927

(56) Documents cités:
- US-A1- 2014 273 141
- Society for Biological Engineering: "LIGNOCELLULOSIC BIOFUELS", , 31 mars 2015 (2015-03-31), XP055248791, Extrait de l'Internet: URL:http://www.cert.ucr.edu/research/ses/C hemical%20Engineering%20Progress%20-%20Lig nocellulosic%20Biofuels.pdf [extrait le 2016-02-09]
- Davis, H.G: "Chemistry and stoichiometry of wood liquefaction", , 17 septembre 2012 (2012-09-17), XP055248829, Extrait de l'Internet: URL:http://escholarship.org/uc/item/2tb3v1 69 [extrait le 2016-02-09]
- ELLIOTT DOUGLAS C ET AL: "Hydrothermal liquefaction of biomass: Developments from batch to continuous process", BIORESOURCE TECHNOLOGY, vol. 178, 13 octobre 2014 (2014-10-13), pages 147-156, XP029125337, ISSN: 0960-8524, DOI: 10.1016/J.BIORTECH.2014.09.132

## Description

### DOMAINE DE L'INVENTION

La présente invention concerne un dispositif et un procédé permettant de transformer la biomasse. Cette transformation est réalisée par liquéfaction hydrothermale et par électrolyse. Elle permet de générer, à partir de la biomasse, du biocarburant constitué d'hydrocarbures.

### ETAT ANTERIEUR DE LA TECHNIQUE

La génération de biocarburant a fait l'objet de nombreux travaux concernant notamment la transformation de matière organique, telle que la biomasse, en alcanes.

Les procédés conventionnels peuvent consister à traiter la biomasse par liquéfaction hydrothermale pour obtenir un mélange contenant :
- de l'huile ;
- du char ;
- une phase aqueuse contenant des produits organiques et inorganiques ; et
- des gaz.

Des étapes ultérieures permettent de séparer ces différents composés issus de la transformation de la biomasse par liquéfaction hydrothermale.

L'huile obtenue correspond à un mélange essentiellement constitué d'hydrocarbures (composés de carbone et d'hydrogène) et de composés organiques oxygénés de type cétones, phénoliques, ester d'acides gras ou acides gras.

Le char correspond à un résidu organique solide. Il comprend des polymères organiques insolubles et des composés inorganiques initialement présents dans la biomasse.

Le procédé de liquéfaction hydrothermale est généralement réalisé dans l'eau, sous pression et à une température de l'ordre de 280 à 350°C. La présence d'hydrogène favorise sa mise en oeuvre. Il peut être réalisé en milieu acide, neutre ou plus généralement basique.

A l'issue de la liquéfaction hydrothermale, la phase aqueuse peut être partiellement recyclée pour initier un nouveau cycle de liquéfaction hydrothermale.

La phase aqueuse est riche en molécules organiques présentant des affinités avec l'eau en raison de leur importante teneur en oxygène et de leur polarité. Il s'agit notamment d'acides carboxyliques, de composés phénoliques, d'alcools et de cétones.

Cependant, des espèces organiques et inorganiques s'accumulent dans la phase aqueuse. Il est généralement nécessaire d'éliminer une partie de la phase aqueuse pour éliminer ces composés solubles dans l'eau qui ne peuvent pas être transformés par liquéfaction hydrothermale.

Cette contrainte représente l'un des principaux inconvénients liés à la liquéfaction hydrothermale. Elle correspond à l'augmentation, lors du recyclage de la phase aqueuse, du taux d'inorganiques dans le mélange biomasse/eau recyclée.

L'huile produite par le procédé de liquéfaction hydrothermale est visqueuse et contient généralement de 10 à 20 % en poids d'oxygène sous la forme de composés oxygénés. Au contraire, les huiles fossiles ne comprennent pratiquement pas d'oxygène. Elles sont essentiellement constituées d'hydrocarbures.

La présence de composés oxygénés peut s'avérer problématique car ils réduisent le pouvoir calorifique et peuvent contribuer au vieillissement de l'huile. Leur élimination est généralement réalisée par des techniques conventionnelles d'hydrotraitement en présence d'un catalyseur et d'hydrogène sous forte pression. Cependant, ce type de purification nécessite des équipements spécifiques. En outre, la présence de ces composés oxygénés diminue le rendement global de génération de biocarburant, au même titre que les composés organiques présents dans la phase aqueuse. US 2014/0273141 divulgue un dispositif et un procédé de traitement de la biomasse par liquéfaction hydrothermale.

La présente invention permet de résoudre les problèmes liés à la présence de composés organiques dans la phase aqueuse, tout en améliorant le rendement de production d'huile à partir de la transformation de la biomasse. Pour cela, le Demandeur a mis au point un dispositif et un procédé combinant d'une part la liquéfaction hydrothermale de la biomasse et d'autre part l'électrolyse de la phase aqueuse résultant de la liquéfaction hydrothermale.

### EXPOSE DE L'INVENTION

Le Demandeur a mis au point un dispositif et un procédé permettant d'améliorer la transformation de la biomasse par liquéfaction hydrothermale et par électrolyse.

La combinaison de la liquéfaction hydrothermale et de l'électrolyse permet d'améliorer le traitement des effluents aqueux en les utilisant pour augmenter le rendement global du procédé de traitement de la biomasse.

La biomasse désigne de la matière d'origine animale, végétale, fongique ou provenant de micro-organismes.

Plus précisément, la présente invention concerne un dispositif de traitement de la biomasse par liquéfaction hydrothermale, tel que défini dans la revendication 1.

Selon un mode de réalisation préféré, ce dispositif comprend, en amont de la pompe d'injection, une unité de mélange de la biomasse et d'eau pour former le fluide à traiter.

Le réacteur de liquéfaction hydrothermale permet de transformer la biomasse en un mélange d'huile, de char, de gaz, et de phase aqueuse comprenant des composés organiques oxygénés.

Comme déjà indiqué, l'huile correspond à un mélange essentiellement constitué d'hydrocarbures (composés de carbone et d'hydrogène) et de composés organiques oxygénés de type cétones, phénoliques, ester d'acides gras ou acides gras. Le char correspond à un résidu organique solide. Il comprend des polymères organiques insolubles et des composés inorganiques initialement présents dans la biomasse.

L'électrolyseur permet de désoxygéner les molécules organiques présentes dans la phase aqueuse pour former des composés hydrocarbonés (hydrocarbures), avantageusement des alcanes.

De manière avantageuse, le dispositif selon l'invention comprend en aval de l'électrolyseur une connexion à l'unité de mélange ou entre l'unité de mélange et la pompe d'injection.

Le dispositif comprend en aval de l'électrolyseur une connexion au réacteur de liquéfaction hydrothermale. Dans ce cas, la phase aqueuse issue de l'électrolyseur est avantageusement pressurisée avant introduction dans le réacteur de liquéfaction hydrothermale. Elle subit alors une étape de pressurisation.

Cette connexion en aval de l'électrolyseur permet de recycler la phase aqueuse électrolysée dans un nouveau cycle de transformation de la biomasse.

Le dispositif selon l'invention comprend une unité de séparation en aval de l'électrolyseur. Elle permet de séparer la phase aqueuse des molécules organiques générées dans l'électrolyseur. Cette unité de séparation est avantageusement une unité de décantation. Elle est située en amont de la connexion permettant le recyclage de la phase aqueuse dans le procédé de liquéfaction hydrothermale.

La présente invention concerne également un procédé de transformation de la biomasse. Ce procédé met en oeuvre le dispositif selon l'invention. Il est défini dans la revendication 6.

Le terme « composé oxygéné » désigne un composé organique comprenant des atomes de carbone, d'hydrogène et d'oxygène.

De manière générale, les composés oxygénés de la phase aqueuse issus du réacteur de liquéfaction hydrothermale sont, seuls ou en mélanges, des cétones, des composés phénoliques, et des acides carboxyliques. Ces composés peuvent également inclure des traces d'alcools.

Le réacteur de liquéfaction hydrothermale comprend généralement un échangeur thermique, une unité de chauffage et un autoclave dans lequel la transformation de la biomasse est réalisée.

L'échangeur thermique permet de préchauffer le fluide avant l'unité de chauffage et avant son introduction dans l'autoclave.

La transformation de la biomasse dans le réacteur de liquéfaction hydrothermale est avantageusement réalisée à une température comprise entre 250 et 350°C, plus avantageusement entre 300 et 310°C. Cette température correspond aux conditions au sein de l'autoclave.

De manière générale, l'électrolyse de la phase aqueuse génère également de l'hydrogène.

L'hydrogène ainsi formé peut être éliminé pendant ou après l'étape d'électrolyse. Il peut être utilisé dans une étape de post-traitement de l'huile obtenue lors de l'étape de séparation. Dans ce cas, l'hydrogène est avantageusement utilisé dans un post-traitement de type hydro-désoxygénation.

Les hydrocarbures formés par électrolyse sont séparés de la phase aqueuse, avantageusement par décantation.

La phase aqueuse électrolysée, et séparée des hydrocarbures générés par l'électrolyse, est recyclée dans un nouveau cycle de transformation de la biomasse. La phase aqueuse électrolysée est alors utilisée pour préparer le fluide qui est injecté dans le réacteur de liquéfaction hydrothermale.

De manière avantageuse, le fluide injecté dans le réacteur de liquéfaction hydrothermale présente un pH basique, avantageusement compris entre 8 et 10.

En outre, l'étape de préparation du fluide peut comprendre l'addition d'une base, par exemple l'hydroxyde ou le carbonate de sodium ou de potassium. D'autres bases sont également envisageables.

L'invention et les avantages qui en découlent ressortiront mieux des figures et exemples suivants donnés afin d'illustrer l'invention et non de manière limitative.

### DESCRIPTION DES FIGURES

La figure 1 illustre schématiquement un dispositif conventionnel permettant la liquéfaction hydrothermale de la biomasse.
La figure 2 illustre schématiquement un dispositif selon l'invention permettant la liquéfaction hydrothermale de la biomasse et l'électrolyse de la phase aqueuse résultant de cette liquéfaction hydrothermale.

### DESCRIPTION DETAILLEE DE L'INVENTION

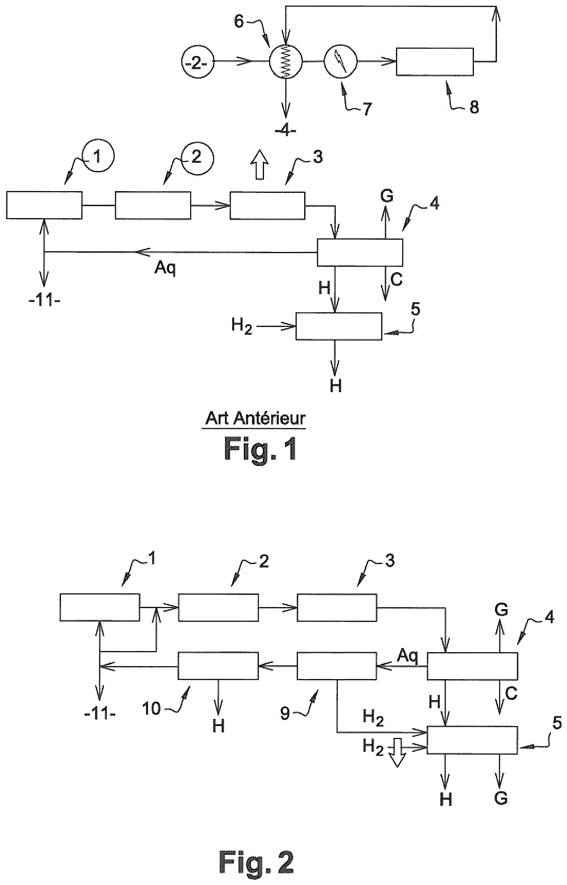

Dans un procédé conventionnel de liquéfaction hydrothermale, la biomasse est généralement mélangée avec de l'eau et une base de type NaOH ou Na₂CO₃ dans une unité de mélange (1) pour former un fluide. Ce fluide est ensuite injecté dans un réacteur de liquéfaction hydrothermale (3) via une pompe (2) (figure 1).

Ce fluide comprend avantageusement 5 à 30% massique de matière sèche dans l'eau, plus avantageusement 5 à 15% et encore plus avantageusement 10 à 15%. L'homme du métier saura ajuster le pourcentage massique de matière sèche en fonction de la nature de la biomasse. En effet, les boues issues des stations d'épuration génèrent des fluides dont la viscosité complique le traitement au-delà de 10% massique.

Ce fluide peut être préparé dans les conditions de température et de pression ambiantes, par exemple à 10⁵ Pa et entre 20 et 50°C. La pompe (2) permet d'injecter le fluide dans le réacteur de liquéfaction hydrothermale (3), avantageusement à une pression au-dessus de la pression saturante de l'eau, avantageusement comprise entre 150 et 200 bars. L'injection sous pression permet de maintenir une phase liquide dans le réacteur (3).

De manière générale, le réacteur de liquéfaction hydrothermale (3) comprend successivement un échangeur thermique (6), un dispositif de chauffage (7) et un autoclave (8). La figure 1 illustre ce mode de réalisation.

L'échangeur thermique (6) permet d'assurer le préchauffage du fluide issu du mélangeur (1) jusqu'à atteindre une température de 150 à 250°C. L'échangeur thermique (6) assure le transfert de chaleur entre le fluide provenant de la pompe (2) (et donc du mélangeur (1)) et le fluide sortant de l'autoclave (8). Ainsi, le fluide entrant est chauffé grâce au fluide sortant qui est refroidi.

Le dispositif de chauffage (7) permet de chauffer le fluide préchauffé à la température de fonctionnement de l'autoclave (8), en général entre 250 et 350°C, avantageusement entre 300 et 310°C. Il s'agit généralement d'un chauffage électrique ou par combustion, le combustible pouvant être pour partie le char issu du procédé de liquéfaction hydrothermale.

Grâce à l'échangeur thermique (6), qui a donc une double fonction préchauffage/ refroidissement, la température du fluide sortant de l'autoclave (8) peut passer de plus de 300°C à moins de 100°C, avantageusement entre 50 et 80°C. La température est choisie pour conserver une fluidité suffisante en sortie de l'autoclave (8) et après passage dans l'échangeur thermique (6), typiquement entre 50 et 80°C.

Une fois traité par liquéfaction hydrothermale dans le réacteur (3), le fluide comprend une phase aqueuse, une phase organique et des gaz.

Le fluide sortant du réacteur (3) est ensuite traité pour séparer la phase aqueuse (Aq) et la phase organique (H + C) dans le séparateur (4). Cette séparation peut notamment être réalisée par décantation. L'eau récupérée peut alors être réinjectée dans l'unité de mélange (1) et/ou purgée via la purge (11).

La phase organique est généralement un mélange d'huile (H) et de char (C) (résidu organique solide).

L'huile (H) et le char (C) sont également séparés dans l'unité (4), par exemple par extraction au moyen d'au moins un solvant qui est avantageusement polaire. Ce solvant peut avantageusement être choisi dans le groupe comprenant le dichlorométhane, le chloroforme, l'acétone, l'éthanol, l'isopropanol, et l'acétate d'éthyle. De manière avantageuse, le solvant utilisé présente une température d'ébullition avantageusement inférieure à 100°C, plus avantageusement inférieure à 90°C.

Les gaz (G) contenus dans le fluide issu du réacteur (3) peuvent également être séparés du fluide dans l'unité (4).

Ainsi, l'unité de séparation (4) permet de séparer la phase aqueuse (Aq), le char (C), l'huile (H) et les gaz (G) contenus dans le fluide issu du réacteur (3).

L'huile issue du séparateur (4) contient typiquement 10 à 20% en poids d'oxygène, par exemple sous la forme de dérivés phénoliques, d'esters d'acides gras et/ou d'acides gras. Par conséquent, la qualité de l'huile, une fois séparée du char, peut être améliorée notamment par hydro-désoxygénation (HDO) dans l'unité (5). L'huile est alors chauffée, avantageusement à une température comprise entre 300 et 400°C, en présence d'un catalyseur et d'hydrogène, avantageusement en présence de 50 à 100 bar d'hydrogène. Le catalyseur est généralement un métal noble supporté sur Al₂O₃ ou ZrO₂. Les composés organiques oxygénés de l'huile sont ainsi dégradés et forment de l'eau et des hydrocarbures.

L'hydro-désoxygénation permet d'éliminer au moins une partie des composés oxygénés éventuellement présents dans l'huile issue du séparateur (4). De manière générale, une molécule de dihydrogène est nécessaire pour éliminer une molécule d'oxygène dans un hydrocarbure.

Au moins une partie de l'eau contenue dans la phase aqueuse peut également être purgée (11) avant éventuelle réinjection dans le mélangeur (1). Cette purge permet d'éliminer les composés organiques ou inorganiques ne pouvant pas être transformés par liquéfaction hydrothermale dans le réacteur (3).

De manière générale, la liquéfaction hydrothermale peut être réalisée en milieu basique, neutre ou acide.

Un pH acide favorise généralement les réactions de polymérisation et ainsi la formation de char. En revanche, un pH neutre ou basique favorise les fragmentations et la formation d'huile.

Par conséquent, le rapport huile (H)/char (C) augmente avec le pH. En outre, le mélange biomasse/eau traité comprend une quantité plus importante de biomasse lorsque le pH augmente.

En milieu basique, par exemple à pH compris entre 8 et 10, la fragmentation des sucres en C6 permet d'obtenir des composés en C2-C5 qui peuvent dimériser. Différents acides carboxyliques peuvent ainsi être formés, par exemple l'acide acétique (C2), l'acide propanoïque (C3), l'acide lactique (C3), l'acide butyrique (C4), l'acide lévulinique (C5) et d'autres dérivés. La dégradation des sucres et des constituants de la lignine produit des cétones et des dérivés phénoliques.

Le dispositif selon l'invention (figure 2) permet de récupérer les éventuels composés organiques présents dans la phase aqueuse (Aq) issue du séparateur (4). Ce dispositif comprend un électrolyseur (9) connecté à la sortie du séparateur (4).

Les unités (1) à (5) du dispositif selon l'invention sont identiques à celles du dispositif illustré par la figure 1 et décrites ci-avant. Leur fonctionnement (température, pression...) est également identique. En outre, le réacteur (3) du dispositif de la figure 2 comprend avantageusement les unités (6), (7) et (8) du réacteur de la figure 1.

Dans le dispositif selon l'invention, la phase aqueuse issue du séparateur (4) est traitée dans l'électrolyseur (9) (figure 2).

Ce dispositif de traitement par liquéfaction hydrothermale de la biomasse comprend :
- une unité de mélange (1) de la biomasse et d'eau pour former un fluide ;
- une pompe d'injection (2) du fluide, en aval de l'unité de mélange (1) ;
- un réacteur de liquéfaction hydrothermale (3) du fluide, en aval de la pompe d'injection (2) ;
- une unité de séparation (4), en aval du réacteur de liquéfaction hydrothermale (3), l'unité de séparation (4) comprenant une sortie de phase aqueuse et une sortie de phase organique ;
- un électrolyseur (9), en aval de la sortie de phase aqueuse de l'unité de séparation.

De manière avantageuse, ce dispositif comprend en aval de l'électrolyseur une connexion à l'unité de mélange (1) ou entre l'unité de mélange (1) et la pompe d'injection (2). La figure 2 illustre ces deux modes de réalisation.

De manière générale, l'électrolyseur (9) fonctionne par passage d'un courant continu ou alternatif entre deux électrodes positionnées dans la phase aqueuse à électrolyser. Les électrodes sont en graphite ou métal, par exemple cuivre, plomb ou plus avantageusement en platine. La température d'électrolyse est avantageusement comprise entre 20 et 60°C, plus avantageusement de l'ordre de 40°C. La tension appliquée est avantageusement comprise entre 1 et 10V.

L'électrolyseur (9) peut comprendre un dispositif de chauffage afin d'atteindre la température d'électrolyse souhaitée.

Selon l'invention, la liquéfaction hydrothermale est avantageusement réalisée en milieu basique. En effet, la conductivité de la phase aqueuse (Aq) issue de la liquéfaction hydrothermale en milieu basique est typiquement plus élevée que celle issue de la liquéfaction en milieu acide ou neutre. La phase aqueuse (Aq) issue de la liquéfaction en milieu basique est donc plus propice à être transformée dans l'étape d'électrolyse.

L'électrolyse permet de diminuer la quantité d'oxygène dans les composés organiques de la phase aqueuse (Aq). L'élimination d'oxygène rend ces composés moins solubles dans l'eau et facilite leur séparation de la phase aqueuse, notamment par décantation.

L'électrolyse de la phase aqueuse (Aq) permet notamment d'éliminer les anions carboxyliques Rⁱ-C(=O)-O⁻ (Rⁱ étant un groupement hydrocarboné) en formant des hydrocarbures après dimérisation et perte de dioxyde de carbone selon la réaction suivante :

Rⁱ-C(=O)-O⁻ + R²-C(=O)-O⁻ + 2H₂O → R¹-R² + 2CO₂ + H₂ + 2OH⁻

Plus précisément, les réactions ayant lieu aux électrodes de l'électrolyseur incluent notamment :
Anode :

   R¹-C(=O)-O⁻ + R²-C(=O)-O⁻ → R¹-R² + 2CO₂ +2e⁻
Cathode :

   2H₂O +2e⁻ → H₂ + 2OH⁻

L'électrolyse mise en oeuvre dans la présente invention est également connue sous le nom d'électrolyse de Kolbe.

La consommation des acides carboxyliques sous forme d'anions produit des anions OH et augmente le pH de la phase aqueuse. La réinjection de la phase aqueuse électrolysée en aval du réacteur (3) permet d'obtenir un fluide ayant un pH basique dans l'unité (1). Il est ainsi possible de réaliser la liquéfaction hydrothermale sans ajout externe de base.

La désoxygénation des cétones par électro-réduction produit des alcanes sur la cathode.
Cathode :

R¹-C(=O)-R² + 4e⁻ + 4H⁺ → R¹-CH₂-R² + H₂O

Selon un mode de réalisation avantageux, le premier cycle de traitement de la biomasse est initié en présence d'une base. De manière avantageuse, les cycles suivants ne nécessitent pas d'ajout de base étant donné que la réinjection de la phase aqueuse électrolysée permet d'obtenir un pH basique, avantageusement compris entre 8 et 10.

La base initialement introduite lors du premier cycle est avantageusement une base d'un métal alcalin ou alcalino-terreux, notamment le sodium. La base utilisée est avantageusement l'hydroxyde ou le carbonate de sodium.

Cette base de métal alcalin (sodium par exemple) ou alcalino-terreux permet de générer des sels à partir des acides carboxyliques présents dans la phase aqueuse issue du séparateur (4). Ces sels d'acides carboxyliques sont ultérieurement transformés en alcanes par l'électrolyseur (9) selon la réaction ci-dessus. L'électrolyse génère également des ions hydroxydes et du dioxyde de carbone qui réagissent entre eux pour former des ions carbonates. Ces ions carbonates peuvent ensuite être réinjectés en aval du réacteur (3) pour augmenter le pH du fluide à traiter par liquéfaction hydrothermale. Cette réinjection peut être réalisée dans l'unité (1) ou entre l'unité (1) et la pompe (2). La génération d'ions carbonate à partir du CO₂ et des ions hydroxyde OH est réalisée dans l'électrolyseur (9).

L'électrolyseur permet non seulement de générer des alcanes de type R¹-R² mais aussi de l'hydrogène à la cathode, et du CO₂ et des hydrocarbures à l'anode (voir les réactions ci-dessus). Ainsi, au moins une partie de l'hydrogène consommé dans l'unité (5) optionnelle peut être issue de la réaction d'électrolyse (9). Dans ce cas, l'électrolyseur (9) peut être connecté à l'unité (5) de traitement de l'huile.

Comme déjà indiqué, la phase aqueuse (Aq) issue de l'électrolyseur (9) peut être injectée en aval du réacteur (3).

Elle peut également être directement injectée dans le réacteur (3). Dans ce cas, la phase aqueuse recyclée est avantageusement préchauffée et injectée sous pression.

Dans le dispositif selon l'invention et illustré par la figure 2, l'unité (5) de traitement de l'huile (H) issue du séparateur (4) et l'unité (10) de décantation de la phase aqueuse (Aq) électrolysée sont optionnelles.

L'unité (5) permet de désoxygéner l'huile issue du séparateur (4).

L'unité de décantation (10), en aval de l'électrolyseur (9), permet de séparer les composés hydrocarbonés résultant de l'électrolyse de la phase aqueuse (Aq), avant réinjection de la phase aqueuse en amont du réacteur (3) ou dans le réacteur (3).

La biomasse traitée dans le dispositif selon l'invention peut contenir des cendres. Celles-ci peuvent s'accumuler dans la phase aqueuse lors des étapes de recyclage après passage dans l'électrolyseur. Dans le but d'éliminer ces cendres, la phase aqueuse peut être purgée (11) régulièrement au cours de cycles non-conformes à l'invention.

Les procédés conventionnels de traitement de la biomasse nécessitent l'apport de composés tels que des sels basiques pour ajuster le pH. Leur présence engendre un flux de déchets aqueux qui nécessite un traitement supplémentaire. En outre, une partie de la biomasse demeure soluble dans ces déchets aqueux, ce qui diminue le rendement de transformation de la biomasse.

La présente invention permet de résoudre ces problèmes grâce à la présence d'un électrolyseur qui traite la phase aqueuse. Cela permet également de recycler au moins partiellement l'eau électrolysée et réduire l'apport en sels basiques.

La présence de l'électrolyseur (9) dans le circuit de recyclage de l'eau permet d'éventuellement produire de l'hydrogène, de transformer les acides en hydrocarbures et de régénérer la basicité du fluide injecté dans le réacteur (3) de liquéfaction hydrothermale.

### EXEMPLE DE REALISATION DE L'INVENTION

Un réacteur de liquéfaction hydrothermale est alimenté avec une biomasse contenant 50% en poids de biomasse sèche et 50% en poids d'eau. Typiquement, le réacteur de liquéfaction fonctionne avec une teneur de 15-20% de matière sèche. L'eau de recyclage permet de diluer et de créer un mélange pouvant être pompé. La quantité matière humide traitée est de l'ordre de 2 tonnes/heure.

Le pouvoir calorifique de la biomasse sèche est de 5 MW. Le rendement (en pourcentage en poids) du réacteur est le suivant :
- 40% d'huile (3-4 MW) ;
- 30% de char (2-3 MW) ;
- 10% de gaz ; et
- 20% de matière organique contenue dans la phase aqueuse, avec un pH d'environ 8.

La quantité de char produite (30% en poids) est égale à 300 kg/heure pour une valeur énergétique de 3 MW.

Le gaz est principalement constitué de CO₂.

La phase aqueuse est traitée dans l'électrolyseur (200 kg/heure). Environ 50% en poids de la matière organique est sous une forme (acide carboxylique) pouvant être transformée en alcanes. Lorsque l'acide carboxylique est l'acide butyrique (C₄H₈O₂), cela représente 0.6 kmol/heure.

Ainsi, l'électrolyseur permet de générer également 0.6 kmol/heure d'hydrogène selon la réaction suivante :

2 CH₃-(CH₂)₂-C(=O)-O⁻ + 2H₂O → CH₃-(CH₂)₂-(CH₂)₂-CH₃ + 2CO₂ + H₂ + 2OH⁻

La consommation électrique est de l'ordre de 0.7 MJ/mol H₂, c'est-à-dire 130 kW.

Par conséquent, l'électrolyseur permet de générer une production additionnelle d'alcanes de l'ordre de 50 kg/heure, ou 600 kW.

## Revendications

1. Dispositif de traitement de la biomasse par liquéfaction hydrothermale comprenant :
- une pompe d'injection (2) d'un fluide de biomasse et d'eau ;
- un réacteur de liquéfaction hydrothermale (3) du fluide, en aval de la pompe d'injection (2), ce réacteur générant un mélange d'huile, de char, de gaz, et de phase aqueuse comprenant des composés organiques oxygénés ;
- une unité de séparation (4), en aval du réacteur de liquéfaction hydrothermale (3), l'unité de séparation (4) comprenant une sortie de phase aqueuse comprenant des composés organiques oxygénés et une sortie de phase organique d'huile, de char et de gaz ;
- un électrolyseur (9), en aval de la sortie de phase aqueuse de l'unité de séparation (4), l'électrolyseur générant une phase aqueuse électrolysée comprenant des molécules organiques ;
- une unité de séparation (10) en aval de l'électrolyseur (9), cette unité permettant de séparer la phase aqueuse de molécules organiques générées lors de l'électrolyse ;
- une connexion recyclant la phase aqueuse électrolysée, cette connexion reliant l'électrolyseur (9) à la pompe d'injection (2).

2. Dispositif de traitement de la biomasse par liquéfaction hydrothermale selon la revendication 1, ***caractérisé* en ce qu'**il comprend, en amont de la pompe d'injection (2), une unité de mélange (1) de la biomasse et d'eau pour former le fluide.

3. Dispositif de traitement de la biomasse par liquéfaction hydrothermale selon la revendication 2, ***caractérisé* en ce que** la connexion reliant l'électrolyseur (9) à la pompe d'injection (2) est connectée à l'unité de mélange (1) ou entre l'unité de mélange (1) et la pompe d'injection (2).

4. Dispositif de traitement de la biomasse par liquéfaction hydrothermale selon la revendication 1, ***caractérisé* en ce qu'**il comprend en aval de l'électrolyseur (9) une connexion au réacteur de liquéfaction hydrothermale (3).

5. Dispositif de traitement de la biomasse par liquéfaction hydrothermale selon l'une des revendications 1 à 4, ***caractérisé* en ce que** l'unité de séparation (10) est une unité de décantation (10) en aval de l'électrolyseur (9).

6. Procédé de transformation de la biomasse comprenant les étapes suivantes dans le dispositif selon l'une des revendications 1 à 5 :
- préparation d'un fluide en mélangeant de la biomasse avec de l'eau ;
- injection de ce fluide dans un réacteur de liquéfaction hydrothermale ;
- transformation de la biomasse dans le réacteur de liquéfaction hydrothermale ;
- obtention d'un fluide comprenant de l'huile, du char, des gaz, une phase aqueuse contenant des composés oxygénés ;
- séparation de l'huile, du char, des gaz, et de la phase aqueuse contenant des composés oxygénés ;
- formation d'hydrocarbures par électrolyse de la phase aqueuse contenant des composés oxygénés,
- séparation de la phase aqueuse et des hydrocarbures générés lors de l'électrolyse ;
- recyclage de la phase aqueuse électrolysée vers la pompe d'injection, dans un nouveau cycle de transformation de la biomasse.

7. Procédé de transformation de la biomasse selon la revendication 6, ***caractérisé* en ce que** les composés oxygénés de la phase aqueuse sont des cétones, des composés phénoliques et des acides carboxyliques.

8. Procédé de transformation de la biomasse selon la revendication 6 ou 7, ***caractérisé* en ce que** les hydrocarbures formés par électrolyse sont séparés de la phase aqueuse par décantation.

9. Procédé de transformation de la biomasse selon l'une des revendications 6 à 8, ***caractérisé* en ce que** la phase aqueuse électrolysée est utilisée pour préparer le fluide injecté dans le réacteur de liquéfaction hydrothermale.

10. Procédé de transformation de la biomasse selon l'une des revendications 6 à 9, ***caractérisé* en ce que** le fluide injecté dans le réacteur de liquéfaction hydrothermale présente un pH basique, avantageusement compris entre 8 et 10.

11. Procédé de transformation de la biomasse selon l'une des revendications 6 à 10, ***caractérisé* en ce que** l'électrolyse est réalisée à une température comprise entre 20 et 60°C, par application d'une tension comprise entre 1 et 10 V.

## Patentansprüche

1. Vorrichtung zum Behandeln von Biomasse durch hydrothermale Verflüssigung, die umfasst:
- eine Pumpe (2) zum Einspritzen einer Biomasseflüssigkeit und von Wasser;
- einen Reaktor (3) zur hydrothermischen Verflüssigung des Fluids, stromab der Einspritzpumpe (2), wobei dieser Reaktor eine Mischung aus Öl, Kohle, Gas und wässriger Phase, die sauerstoffhaltige, organischen Verbindungen enthält, erzeugt;
- eine Trenneinheit (4) stromabwärts des hydrothermalen Verflüssigungsreaktors (3), wobei die Trenneinheit (4) einen Auslass für die sauerstoffhaltige, organischen Verbindungen enthaltende, wässrige Phase und einen Auslass für die organische Phase aus Ö1, Kohle und Gas umfasst;
- einen Elektrolyseur (9) stromabwärts des Auslass für die wässerige Phase der Trenneinheit (4), wobei der Elektrolyseur eine elektrolysierte wässrige Phase erzeugt, die organische Moleküle enthält;
- eine Trenneinheit (10), stromabwärts des Elektrolyseurs (9), diese Einheit ermöglicht die Trennung der wässrigen Phase von den bei der Elektrolyse erzeugten organischen Molekülen;
- eine Verbindung, die die elektrolysierte wässrige Phase recycelt, diese Verbindung verbindet den Elektrolyseur (9) mit der Einspritzpumpe (2).

2. Vorrichtung zum Behandeln von Biomasse durch hydrothermale Verflüssigung, gemäß Anspruch 1, ***dadurch gekennzeichnet, dass*** sie stromaufwärts der Einspritzpumpe (2) eine Einheit zum Mischen (1) der Biomasse und des Wassers enthält, um das Fluid zu bilden.

3. Vorrichtung zum Behandeln von Biomasse durch hydrothermale Verflüssigung, gemäß Anspruch 2, ***dadurch gekennzeichnet, dass*** die Verbindung zwischen dem Elektrolyseur (9) und der Einspritzpumpe (2) mit der Mischeinheit (1) und zwischen der Mischeinheit (1) und der Einspritzpumpe (2) verbunden ist.

4. Vorrichtung zum Behandeln von Biomasse durch hydrothermale Verflüssigung, gemäß Anspruch 1, ***dadurch gekennzeichnet, dass*** sie stromabwärts des Elektrolyseurs (9) eine Verbindung zum hydrothermalen Verflüssigungsreaktor (3) enthält.

5. Vorrichtung zum Behandeln von Biomasse durch hydrothermale Verflüssigung, gemäß einem der Ansprüche 1 bis 4, **dadurch gekennzeichnet, dass** die Trenneinheit (10) aus einer Dekantiereinheit (10) stromabwärts des Elektrolyseurs (9) besteht.

6. Verfahren zur Umwandlung der Biomasse, in der Vorrichtung gemäß einem der Ansprüche 1 bis 5, das die folgenden Schritte umfasst:
- Vorbereitung eines Fluids durch Mischen der Biomasse mit Wasser;
- Einspritzen dieses Fluids in einen hydrothermalen Verflüssigungsreaktor;
- Umwandeln der Biomasse im hydrothermalen Verflüssigungsreaktor;
- Erhalt eines Fluids, das Öl, Kohle, Gase und eine wässrige Phase mit sauerstoffhaltigen Verbindungen enthält,
- Trennung von Öl, Kohle und Gase und der wässrigen Phase mit sauerstoffhaltigen Verbindungen,
- Bildung von Kohlenwasserstoffen durch Elektrolyse der sauerstoffhaltige Verbindungen enthaltenden wässrigen Phase,
- Trennung der wässrigen Phase von den bei der Elektrolyse erzeugten Kohlenwasserstoffen;
- Recycling der elektrolysierten wässrigen Phase zur Einspritzpumpe, in einen neuen Biomasse- Umwandlungszyklus.

7. Verfahren zur Umwandlung der Biomasse gemäß Anspruch 6 **gekennzeichnet dadurch, dass** die sauerstoffhaltigen Verbindungen der wässrigen Phase Ketone, Phenolverbindungen und Carbonsäuren sind.

8. Verfahren zur Umwandlung der Biomasse gemäß Anspruch 6 oder 7, **gekennzeichnet dadurch, dass** die durch Elektrolyse gebildeten Kohlenwasserstoffe von der wässrigen Phase durch Dekantieren getrennt werden.

9. Verfahren zur Umwandlung der Biomasse gemäß einem der Ansprüche 6 bis 8, ***dadurch gekennzeichnet, dass*** die elektrolysierte wässrige Phase verwendet wird, um das in den hydrothermalen Verflüssigungsreaktor eingespritzte Fluid herzustellen.

10. Verfahren zur Umwandlung der Biomasse gemäß einem der Ansprüche 6 bis 9*, **dadurch gekennzeichnet, dass*** das in den hydrothermalen Verflüssigungsreaktor eingespritzte Fluid einen basischen pH-Wert hat, der vorteilhafterweise zwischen 8 und 10 liegt.

11. Verfahren zur Umwandlung der Biomasse gemäß einem der Ansprüche 6 bis 10, ***dadurch gekennzeichnet, dass*** die Elektrolyse bei einer Temperatur zwischen 20 und 60° durch Anlegen einer Spannung zwischen 1 und 10 V erfolgt.

## Claims

1. Device for treating the biomass by hydrothermal liquefaction comprising:
- A biomass and water injection pump (2);
- A hydrothermal liquefaction reactor (3) of the fluid, downstream of the injection pump (2), which reactor generates a mixture of oil, char, gas, and an aqueous phase comprising oxygenated compounds;
- A separation unit (4), downstream of the hydrothermal liquefaction reactor (3), with separation unit (4) comprising an aqueous phase outlet including the oxygenated organic compounds and an organic oil, char and gas phase outlet;
- An electrolyser (9), downstream of the aqueous phase of the separation unit (4), which electrolyser generates an electrolyzed aqueous phase comprising organic molecules;
- A separation unit (10) downstream of the electrolyser (9), which unit separates the aqueous phase of the organic molecules generated during the electrolysis;
- A connection recycling the electrolyzed aqueous phase, which connection connects the electrolyzer (9) to the injection pump (2).

2. Device for treating the biomass by hydrothermal liquefaction according to claim 1, ***characterized in that*** it includes, upstream of the injection pump (2), a mixing unit (1) of the biomass and water, to form the fluid.

3. Device for treating the biomass by hydrothermal liquefaction according to claim 2, ***characterized in that*** the connection connecting the electrolyser (9) to the injection pump (2) is connected to the mixing unit (1) or between the mixing unit (1) and the injection pump (2).

4. Device for treating the biomass by hydrothermal liquefaction according to claim 1, ***characterized in that*** it includes downstream of the electrolyser (9) a connection to the hydrothermal liquefaction reactor (3).

5. Device for treating the biomass by thermal liquefaction according to one of the claims 1 to 4, ***characterized in that*** the separation unit (10) is a decanting unit (10) downstream of the electrolyser (9).

6. Method for conversion treatment of the biomass comprising the following steps in the device, according to one of the claims 1 to 5:
- preparation of a fluid by mixing the biomass with water;
- injection of this fluid into a hydrothermal liquefaction reactor;
- conversion of the biomass in the hydrothermal liquefaction reactor;
- obtaining of a fluid comprising oil, char, gases, an aqueous phase containing oxygenated compounds;
- separation of the oil from the char, the gases and the aqueous phase containing oxygenated compounds;
- forming of hydrocarbons by electrolysis of the aqueous phase containing oxygenated compounds,
- separation of the aqueous phase and the hydrocarbons generated during electrolysis;
- recycling of the electrolyzed aqueous phase to the injection pump in a new biomass conversion cycle.

7. Method for conversion treatment of the biomass according to claim 6, ***characterized in that*** the oxygenated compounds of the aqueous phase are ketones, phenol compounds and carboxylic acids.

8. Method for conversion treatment of the biomass according to claim 6, ***characterized in that*** the hydrocarbons formed by electrolysis are separated from the aqueous phase by decanting.

9. Method for conversion treatment the biomass according to one of the claims 6 to 8, ***characterized in that*** the electrolyzed aqueous phase is used for preparing the fluid injected into the hydrothermal liquefaction reactor.

10. Method for conversion treatment of the biomass according to one of the claims 6 to 9, ***characterized in that*** the fluid injected into the hydrothermal liquefaction reactor has an alkaline pH, advantageously included between 8 and 10.

11. Method for conversion treatment of the biomass according to one of the claims 6 to 10, ***characterized in that*** the electrolyte is produced at a temperature included between 20°C and 60°C, by the application of a voltage included between 1 and 10 V.
